# EUROPEAN PATENT APPLICATION

(11) **EP 1 921 576 A2**
(43) Date of publication of application: **14.05.2008**
(21) Application number: 07115166.6
(22) Date of filing: 29.08.2007
(51) Int. Cl.: G06Q 10/00

(54) **Location identifcation/management system, card reader, and location identification/management method**

(30) Priority: 23.10.2006 JP 2006287923
(71) Applicant: Fujitsu Limited, Kawasaki-shi, Kanagawa 211-8588 (JP)
(72) Inventor: Okamasu, Takayuki, Fukuoka-shi, Fukuoka 814-8588 (JP); Inao, Yuichi, Fukuoka-shi, Fukuoka 814-8588 (JP); Yamada, Kenji, Fukuoka-shi, Fukuoka 814-8588 (JP)
(74) Representative: Cooper-Rolfe, Elizabeth Louise

(57) **Abstract**

In a location identification/management system, a portable medium reader reads a moving object identifier stored in a portable medium and relays the moving object identifier. A radio frequency identification (RFID) reader receives relayed moving object identifier and transmits a notification containing the moving object identifier and a unique RFID-reader identifier assigned thereto. A management server receives the notification and identifies a location of the moving object from the moving object identifier and the unique RFID-reader identifier contained in the notification.

## Description

### BACKGROUND OF THE INVENTION

### 1. Field of the Invention

The present invention relates to a system, a card reader, and a method of identifying a location of a moving object from a moving object identifier stored in a portable medium.

### 2. Description of the Related Art

Radio frequency identification (RFID) tags have come into wide use in recent years for identifying and managing a mobile object. An RFID tag is a radio tag, usually measured a few centimeters and containing identification data for identifying an individual tag data pertaining to the RFID tag. The RFID tag communicates with an RFID reader. There are two types of RFID tags, namely, active and passive. An active RFID tag has an embedded battery capable of autonomous transmission within a long range of a dozen meters. A passive RFID tag does not include a battery and has a short communication range.

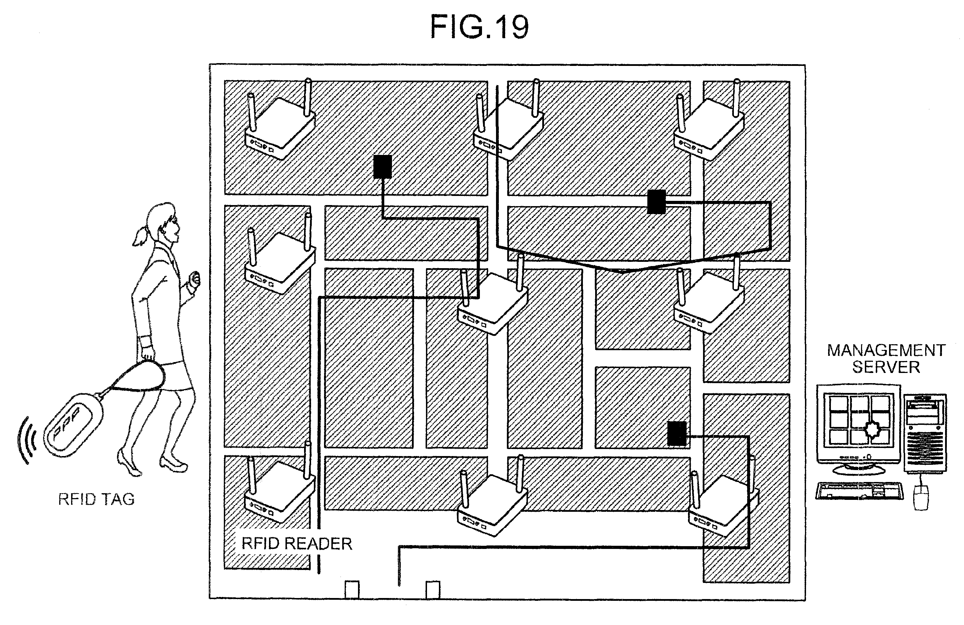

Active RFID tags can be used for studying movement management of commodities, flow line management of people and mobile objects, etc. A conventional location identification/management system shown in Fig. 19 includes an active RFID tag that autonomously transmits the tag ID periodically, a plurality of RFID readers that detect and receive the tag ID, and a management server that stores therein the tag ID and personal data in an associated form.

The RFID readers receive the tag ID from the RFID tag traveling with a user, and notify the tag ID to the management server. The management server identifies a location of the RFID tag based on the location of the RFID reader, and creates a route along which the RFID tag moves by arranging identified locations in time order. In addition, the management server retrieves the personal data corresponding to the tag ID notified by the RFID readers, and identifies a person who carries the RFID tag.

Japanese Patent Application Laid-open No. H4-360296 discloses a technology that obtains a personal data by using a personal identification medium (integrated circuit (IC) cards, for example) that stores therein a unique ID for identifying the personal identification medium thereto. A card reader reads the unique ID (card ID) of an IC card and notifies the card ID to a database that stores therein card IDs and personal data in an associated form. The personal data associated with the card ID is retrieved from the database.

However, in the above system that uses RFID tag, the users need to be issued new RFID tags with unique IDs. This further entails creating and managing a database of card IDs and personal data, increasing the person-hours. Additionally, there is always a risk of missed issue of RFID tag or missed card ID entry in the database, etc.

Also, the user needs to carry the RFID tag containing the personal data, which, apart from being inconvenient, increases the risk of the RFID tag being stolen or lost.

Furthermore, the location of the personal identification medium cannot be identified by merely retrieving the personal data from the personal identification medium.

### SUMMARY OF THE INVENTION

It is desirable to at least partially solve the problems in the conventional technology.

According to an aspect of the present invention, there is provided a system that identifies and manages a location of a moving object based on a moving object identifier stored in a portable medium that is carried by the moving object. The system includes a portable medium reader that is configured to be carried by the moving object, the portable medium reader including a reading unit that reads the moving object identifier stored in the portable medium; and a relaying unit that relays the moving object identifier; a plurality of RFID readers, each placed at a different location and assigned with a unique RFID-reader identifier, the RFID reader including a first receiving unit that receives relayed moving object identifier; and a notifying unit that transmits a notification containing the moving object identifier and the unique RFID-reader identifier assigned thereto; a management server that includes a second receiving unit that receives the notification; and a identifying unit that identifies a location of the moving object from the moving object identifier and the unique RFID-reader identifier contained in the notification.

According to another aspect of the present invention, there is provided a portable medium reader that is configured to be carried by a moving object and includes a reading unit that reads a moving object identifier from a portable medium; and a relaying unit that relays the moving object identifier such that a radio frequency identification reader can receive relayed moving object identifier.

According to still another aspect of the present invention, there is provided a method of managing a location of a moving object based on a moving object identifier stored in a portable medium that is carried by the moving object. The method includes a first control that is performed by a portable medium reader including reading the moving object identifier stored in the portable medium; and relaying the moving object identifier; a second control that is performed by a plurality of radio frequency identification (RFID) readers, each placed at a different location and assigned with a unique RFID-reader identifier, the second control including receiving relayed moving object identifier; and transmitting a notification containing the moving object identifier and the unique RFID-reader identifier assigned thereto; and a third control that is performed by a management server including receiving the notification; and identifying a location of the moving object from the moving object identifier and the unique RFID-reader identifier contained in the notification.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram for explaining an overview and salient features of a location identification/management system according to a first embodiment of the present invention;
Fig. 2 is a block diagram of a portable IC card reader shown in Fig. 1;
Fig. 3 is a schematic diagram of a contact-type IC card shown in Fig. 1;
Fig. 4 is a diagram for explaining contents of relayed data that is relayed at a radio relay process;
Fig. 5 is a schematic diagram of an RFID tag detection network shown in Fig. 1;
Fig. 6 is a diagram for explaining a frame format of notification data that is transmitted from an RFID reader to a management server, both shown in Fig. 1;
Fig. 7 is a block diagram of the management server;
Fig. 8 is a diagram for explaining contents of a table stored in the management server;
Fig. 9 is a diagram for explaining another table stored in the management server;
Fig. 10 is a schematic diagram for explaining an overview and salient features of a location identification/management system according to a second embodiment of the present invention;
Fig. 11 is a schematic diagram for explaining an overview and salient features of a location identification/management system according to a third embodiment of the present invention;
Fig. 12 is a schematic diagram of a magnetic stripe card according to a modification of the present invention;
Fig. 13 is a schematic diagram of a contactless IC card according to another modification of the present invention;
Fig. 14 is a schematic diagram for explaining a magnetic reading process;
Figs. 15 to 17 are diagrams for explaining contents of relayed data that is relayed at the radio relay process;
Fig. 18 is a schematic diagram of a management server according to a fourth embodiment of the present invention; and
Fig. 19 is a schematic diagram for explaining a conventional location identification/management system that uses an RFID tag.

### DETAILED DESCRIPTION OF THE PREFERRED EMBODIMENTS

Exemplary embodiments of the present invention are described below with reference to the accompanying drawings.

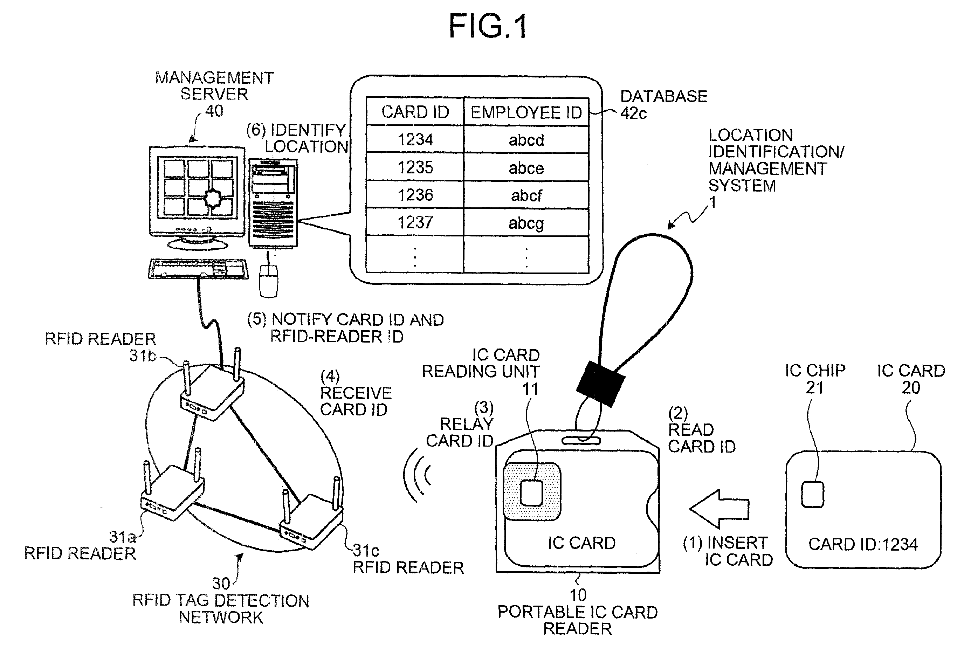

The overview and the salient features of a location identification/management system 1 according to a first embodiment of the present invention are described below. Fig. 1 is a schematic diagram for explaining the overview and the salient features of the location identification/management system 1.

The location identification/management system 1 identifies a location of a moving object based on data that is collected by a plurality of FRID readers 31a to 31c and that is stored in a management server 40. Each of the RFID readers 31a to 31c is located at a different location. The location identification/management system 1 is effective in cutting down person-hours, decreasing the risk of missed delivery or entry, enhances ease of use, and decreases the risk of theft of loss.

To explain the salient features more specifically, the management server 40 of the location identification/management system 1 stores card ID uniquely identifying a user and personal data ("employee ID" in the example shown in Fig. 1) of the user in an associated form in a database 42c. Each of IC cards 20 stores therein a unique card ID with which the IC card 20 can be identified. Each of the RFID readers 31a to 31c has a unique RFID-reader ID (for example, Spot 1). The RFID readers 31a to 31c are placed within an area, such as an office, where staff member's locations are to be identified. The staff members carry the 1C card 20 with them when they move within the area.

A portable IC card reader 10 of the location identification/management system 1 accepts the IC card 20 (which is a contact-type IC card) with the card ID readably stored therein (see (1) of Fig. 1), and reads the card ID from the IC card 20 (see (2) of Fig. 1). Specifically, when the IC card 20 is inserted, the portable IC card reader 10 connects to an IC chip 21 via a metal contact 22 of the IC card, and reads the card ID stored in the IC chip 21.

The portable IC card reader 10 transmits the card ID to the RFID readers 31a to 31c of an RFID tag detection network 30 (see (3) of Fig. 1). Specifically, the portable IC card reader 10 periodically transmits the read card ID to the RFID readers 31a to 31c over the radio. Transmission period is determined depending on usage.

The RFID readers 31a to 31c of the RFID tag detection network 30 detect and receive the card ID from the portable IC card reader 10 (see (4) of Fig. 1). Specifically, each of the RFID readers 31a to 31c can detect and receive the card ID radio-transmitted in their respective detection range. The RFID readers 31a to 31c send the received card ID along with the unique RFID-reader ID to the management server 40 (see (5) of Fig. 1).

The management server 40 identifies the location of the user based on the card ID and the RFID-reader ID received from the RFID readers 31a to 31c (see (6) of Fig. 1). Specifically, the management server 40 reads the employee ID corresponding to the card ID received from the RFID readers 31a to 31c, and identifies the location based on the RFID-reader ID, thereby identifies the location (for example, Spot 1) of the user identified by the employee ID.

The location identification/management system 1 is built by using the existing IC card 20 and the existing management server 40, without issuing new RFID tags and without installing a new management server, thus cutting down the person-hours, and reducing the risk of missed RFID tag issuing or missed entry of tag ID. The location identification/management system 1 does not need a new IC card, which improves user convenience and reduces the risk to be stolen or lost.

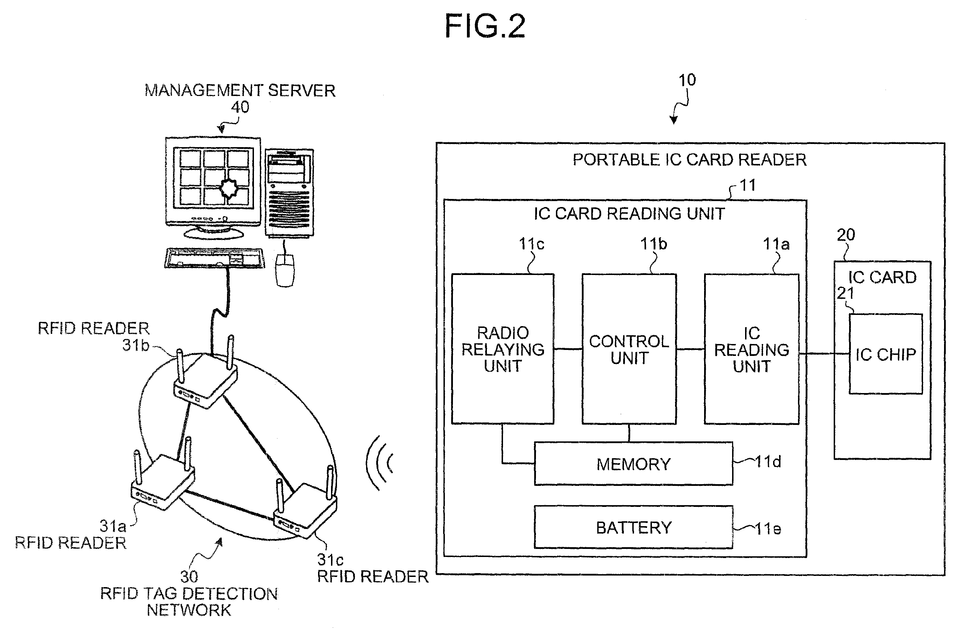

The configuration of the portable IC card reader 10 shown in Fig. 1 is described below. Fig. 2 is a block diagram of the portable IC card reader 10. The portable IC card reader 10 includes an IC card reading unit 11. When the portable IC card 10 is inserted into the portable IC card reader 10, the IC card reading unit 11 comes in contact with the portable IC card reader 10.

The IC card reading unit 11 includes an internal memory for storing various types of data, and executes various processes. In close relevance to the embodiment, the IC card reading unit 11 includes an IC reading unit 11a, a control unit 11b, a radio relaying unit 11c, a memory 11d, and a battery 11e.

The memory 11d stores therein the card ID read by the IC reading unit 11a. The battery 11e supplies power to the IC card reading unit 11 and drives the IC reading unit 11a, the control unit lib, the radio relaying unit 11c, and the memory 11d.

When the IC card 20 with the card ID readably stored therein is inserted, the IC reading unit 11a reads the card ID from the IC card 20. Specifically, the IC reading unit 11a comes in contact with the IC chip 21 of the IC card 20, and reads the card ID stored in the IC chip 21.

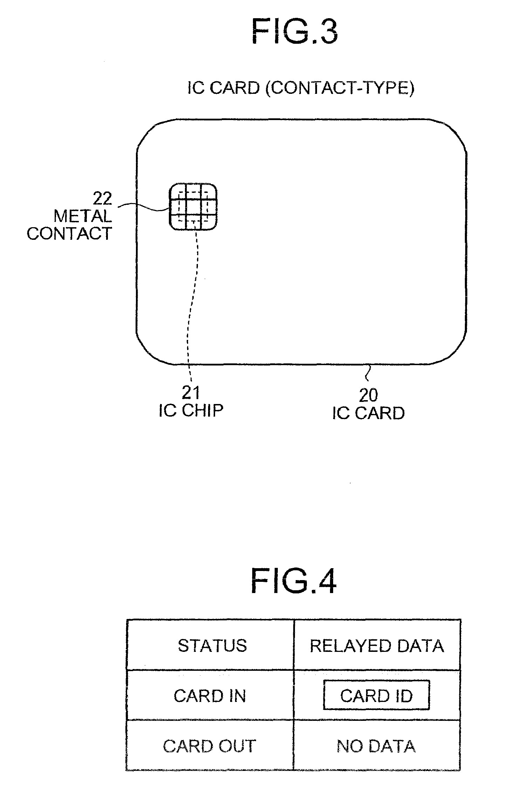

The configuration of the IC card 20 is explained below. Fig. 3 is a schematic diagram of the contact-type IC card. The IC card 20 is a contact type and includes the metal contact 22 on the surface and the IC chip 21 incorporated inside the card. The metal contact 22 and the IC chip 21 are connected to each other.

The IC reading unit 11a is arranged in the portable IC card reader 10 at such a spot that the IC reading unit 11a comes in contact with the metal contact 22 when the IC card 20 is inserted into the portable IC card reader 10 completely. When the IC card 20 is inserted into the portable IC card reader 10, the IC reading unit 11a supplies power through the metal contact 22, and reads the card ID stored in the IC chip 21 via the metal contact 22.

Returning to Fig. 2, the control unit 11b controls the portable IC card reader 10. Specifically, upon detecting insertion of the IC card 20, the control unit 11b controls the IC reading unit 11a to read the card ID, and stores the card ID in the memory 11d.

The radio relaying unit 11c relays the card ID to the RFID readers 31a to 31c of the RFID tag detection network 30. Specifically, the radio relaying unit 11c reads the card ID from the memory 11d, and periodically relays the card ID as RFID to the RFID readers 31a to 31c.

Contents of relayed data that is relayed by the radio relaying unit 11c are described below. Fig. 4 is a diagram for explaining contents of the relayed data that is relayed at a radio relay process. When the IC card 20 is inserted, the radio relaying unit 11c relays the card ID. When no IC card 20 is inserted, the radio relaying unit 11c does not relay any data.

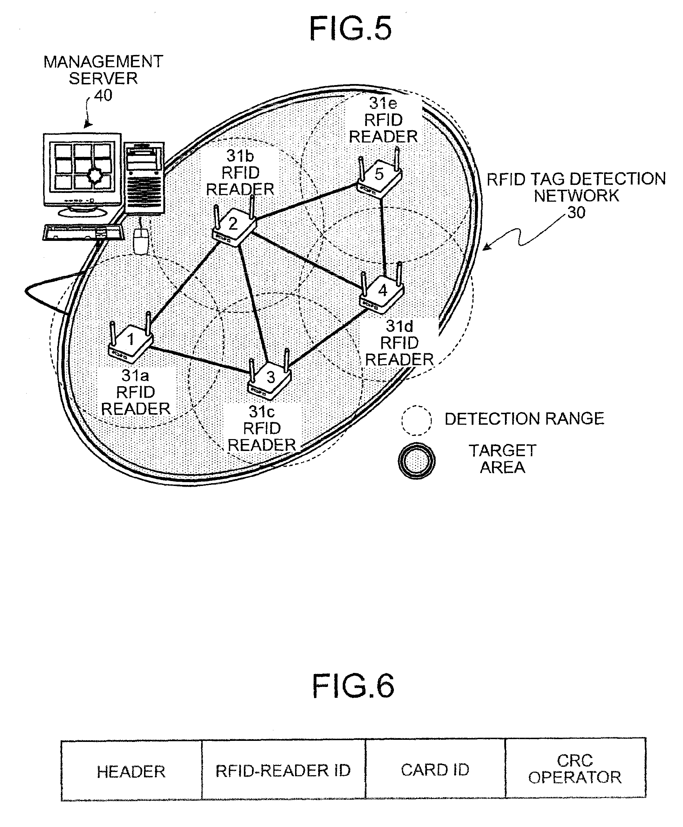

The configuration of the RFID tag detection network 30 according is described below with reference to Figs. 5 and 6. Fig. 5 is a schematic diagram of the RFID tag detection network. Fig. 6 is a diagram for explaining a frame format of notification data that is transmitted from the RFID reader to the management server.

As shown, in Fig. 5, the RFID tag detection network 30 includes a plurality of RFID readers 31a to 31e and is connected to the management server 40. The RFID readers 31a to 31e can detect signals in a range having a radius of a few centimeters to a few meters. The number of the RFID readers installed in a target area can vary as appropriately. The RFID readers 31a to 31e are interconnected both by external cables and wirelessly, thereby forming a network. A unique RFID-reader ID is assigned to each of the RFID readers 31a to 31e (in the example shown in Fig. 5, "1" is assigned to the RFID reader 31a). The connection pattern of the RFID readers 31a to 31e can be in the form of a bus, ring, star, or mesh.

The RFID readers 31a to 31e detect and receive the card ID relayed by the portable IC card reader 10. Specifically, each of the RFID readers 31a to 31e detects and receives the card ID radio-transmitted in their respective detection range.

The RFID readers 31a to 31c send the card ID along with the unique RFID-reader ID to the management server 40. For example, the RFID readers 31a to 31c sends notification data in the frame format shown in Fig. 6 containing a header, an RFID-reader ID, a card ID, and a cyclic redundancy check (CRC) operator.

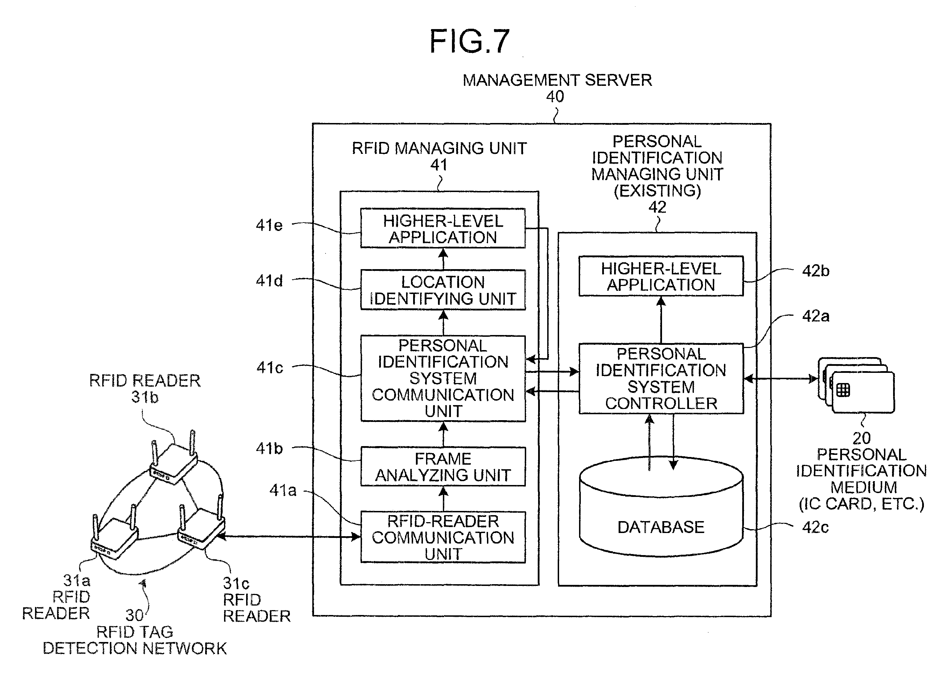

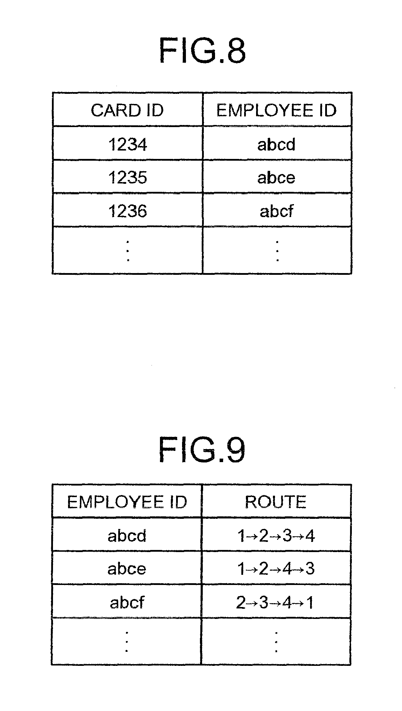

The configuration of the management server 40 is described below with reference to Figs. 7 to 9. Fig. 7 is a block diagram of the management server 40. Fig. 8 is a diagram for explaining contents of a table stored in the management server. Fig. 9 is a diagram for explaining contents of another table stored in the management server. As shown in Fig. 7, the management server 40 includes an RFID managing unit 41 that identifies a location of a user and a personal identification managing unit 42 for which an existing unit is applied. The management server 40 is connected to the RFID tag detection network 30.

The RFID managing unit 41 includes an RFID-reader communication unit 41a, a frame analyzing unit 41b, a personal identification system communication unit 41c, a location identifying unit 41d, and a higher-level application 41e.

The RFID-reader communication unit 41a enables data exchange between the personal management server 40 and the RFID tag detection network 30. Specifically, the RFID-reader communication unit 41a receives notification data from the RFID tag detection network 30 and sends the notification data to the frame analyzing unit 41b.

The frame analyzing unit 41b analyzes the notification data. Specifically, the frame analyzing unit 41b receives notification data from the RFID-reader communication unit 41a and analyzes the notification data. As a result of the analysis, the frame analyzing unit 41b retrieves the card ID and the RFID-reader ID from the notification data, as well as a reception time of receiving the notification data, and sends the retrieved data to the personal identification system communication unit 41c.

The personal identification system communication unit 41c accesses the personal identification managing unit 42 either to refer to or to store data in a database 42c. Specifically, the personal identification system communication unit 41c sends the card ID received from the frame analyzing unit 41b to a personal identification system controller 42a of the personal identification managing unit 42, retrieves the employee ID corresponding to the card ID from the database 42c (described later with reference to Fig. 8), and sends the employee ID, the RFID-reader ID, and the reception time to the location identifying unit 41d. The personal identification system communication unit 41c stores the data pertaining to the route of the user received from the higher-level application 41e in the database 42c.

The location identifying unit 41d identifies the location of the user based on the card ID and the RFID-reader ID notified by the RFID readers 31a to 31c. Specifically, the location identifying unit 41d reads the employee ID corresponding to the card ID received from the personal identification system communication unit 41c, and identifies the location (a location of an RFID reader, for example, Spot 1) of the user identified by the employee ID, and sends the user's location and the reception time to the higher-level application 41e.

The higher-level application 41e is a software application that performs various processes based on the user location and the reception time. Specifically, the higher-level application 41e calculates a route of the user based on the user location and the reception time received from the location identifying unit 41d, and sends the data pertaining to the calculated route of the user (for example, route "1→2→3→4") to the personal identification system communication unit 41c.

As shown in Fig. 7, the personal identification managing unit 42 includes the personal identification system controller 42a, a higher-level application 42b, and the database 42c.

The database 42c contains the card ID that uniquely identifies the user and the personal data of the user in an associated form. The database 42c also stores the personal data and the route of the user corresponding to the personal data in an associated form. Specifically, as shown in Fig. 8, the database 42c contains the card ID (for example, card ID "1234") and the employee ID (for example, employee ID "abed") that uniquely identifies who uses the card in an associated form. The database 42c contains, as shown in Fig. 9, the employee ID and the route (for example, route "1→2→3→4") of the user identified by the employee ID in an associated form.

The personal identification system controller 42a accesses the database 42c to refer to the data stored in the database 42c or to store data in the database 42c. Specifically, upon receiving the card ID from the personal identification system communication unit 41c, the personal identification system controller 42a accesses the database 42c, retrieves the employee ID corresponding to the card ID, and sends the employee ID to the personal identification system communication unit 41c. Further, upon receiving the data pertaining to the route of the user from the personal identification system communication unit 41c, the personal identification system controller 42a accesses the database 42c and stores the data in the database 42c. The personal identification system controller 42a receives the IC card 20 from another device (such as an entry-access control device that controls entry into or exit from a room), retrieves the employee ID corresponding to the card ID, and sends the employee ID to the higher-level application 42b.

The higher-level application 42b is a software application that performs various processes based on the employee ID. For example, the higher-level application 42b performs individual authentication or entry access control based on the employee ID.

Thus, the card reader carried by the user reads the IC card 20 when the IC card containing the card ID that uniquely identifies the user is inserted into the card reader and relays the card ID to the RFID tag detection network 30. The RFID tag detection network 30 detects and receives the card ID and notifies to the management server 40 the card ID as well as the RFID-reader ID that uniquely identifies each RFID reader 31. The management server 40 identifies the location of the user based on the card ID and the RFID-reader ID. Consequently, without issuing new RFID tags or installing a new management server, the location identification/management system that identifies a location of the user can be established by using the existing personal identification medium and the management server. As a result, the person-hours for building the location identification/management system can be reduced and the risk of missed issuing or missed entry of tag ID can be reduced. Further, the location identification/management system does not need a new IC card, which improves user convenience and reduces the risk to be stolen or lost.

Route calculation is explained according to the first embodiment. In addition, the system can control entry access to a predetermined place based on the calculated route of the user.

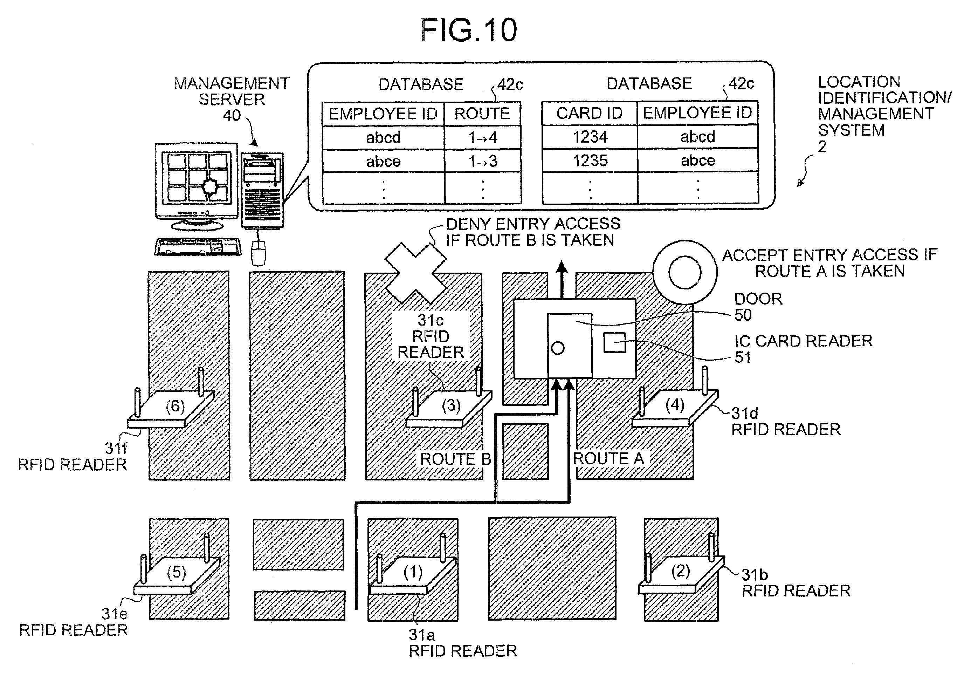

In a second embodiment of the present invention, a location identification/management system 2 controls entry access to a predetermined place using the route of the user. Fig. 10 is a schematic diagram for explaining an overview and the salient feature of the location identification/management system 2.

As shown in Fig. 10, in the location identification/management system 2, an IC card reader 51 is installed at a door 50 to a predetermined place. The IC card reader 51 and the management server 40 are connected via a network (not shown). The IC card reader 51 reads the card ID from the IC card 20, sends the card ID to the management server 40. Upon receiving the card ID, the management server 40 returns a signal for controlling opening/closing operations of the door 50.

The location identification/management system 2 controls entry access to a predetermined place depending on not only the card ID but also the route along which the identified user travels. To give an example, as shown in Fig. 10, if the route of the employee ID corresponding to the received card ID is Route A (Route 1→4), the management server 40 accepts the entry access, and if the route is Route B (Route 1→3), the management server 40 denies the entry access.

To explain in further detail with reference to Fig. 10, upon receiving the card ID "1234" from the IC card reader 51, the management server 40 searches a route of a user having the employee ID "abcd", which corresponds to the card ID "1234", and acquires the route "1→4". As the route "1→4" is Route A, the management server 40 accepts the entry access of the user. If receiving the card ID "1235", the management server 40 searches a route of a user having the employee ID "abce", which corresponds to the card ID "1235", and acquires the route "1→3". As the route "1→3" is Route B, the management server 40 denies the entry access of the user.

In the second embodiment, the management server 40 controls entry access to a predetermined place based on the IC card 20 and based on the route of the identified user, thus enhancing security. It means that if a moving object tries to enter the place via a suspicious route, the location identification/management system can deny an entry access of the moving object.

Although the location, identification/management system constantly identifies a location or a user according to the first and the second embodiments, the location identification/management system identifies a location of a user after accepting an entry access into a predetermined place.

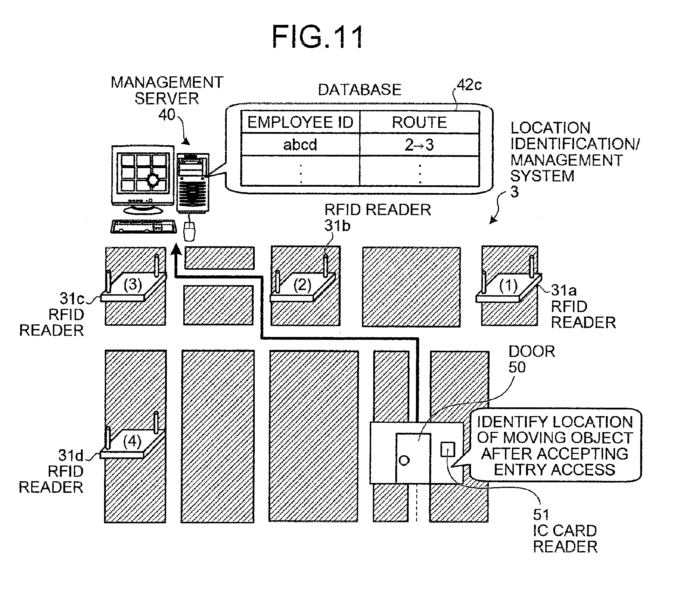

In a third embodiment of the present invention, a location identification/management system 3 identifies a location of a user after accepting an entry access to a predetermined place. Fig. 11 is a schematic diagram for explaining an overview and the salient feature of the location identification/management system 3.

As shown in Fig. 11, in the location identification/management system 3, the IC card reader 51 is installed on the door 50 to a predetermined place, similar to the example according to the second embodiment, and the IC card reader 51 reads a card ID from the IC card 20 and sends the card ID to the management server 40.

After accepting the entry access of the user to the predetermined place, the management server 40 of the location identification/management system 3 starts identifying a location of a moving object corresponding to the user. Specifically, the management server 40 determines whether the entry access is acceptable based on the employee ID corresponding to the received card ID. When determining that the entry access is acceptable, the management server 40 starts calculating a route of the user.

To explain in further detail with reference to Fig. 11, upon receiving the card ID "1234" from the IC card reader 51, the management server 40 reads the employee ID "abcd" corresponding to the card ID "1234". The management server 40 then determines whether the entry access is acceptable based on the employee ID "abcd". If it is determined that entry access is acceptable, the management server 40 sets a flag attached to the card ID "abcd" ON. Upon receiving the card ID and the RFID-reader ID from the RFID reader 31, the management server 40 checks whether a flag attached to the received card ID is ON. If the flag is OFF, the management server 40 neither retrieves the employee ID corresponding to the card ID nor calculates the route. If the flag is ON, the management server 40 retrieves the employee ID corresponding to the card ID and calculates the route. In other words, the management server 40 starts calculating the route of the user having the employee ID (i.e., Route "2→3" shown in Fig. 10) after accepting the entry access of the employee ID "abcd" passing through the door 50.

In the third embodiment, the management server 40 controls entry access to a predetermined place based on the IC card 20, and identifies a route of the user after the user is allowed entry access to the place. For example, the location identification/management system can identify only users who enter an important place. By limiting users to be identified the location identification/management system enables cutting down in processing load.

The embodiments described allow various modifications. The modifications to the described embodiments are collectively described below as a fourth embodiment of the present invention.

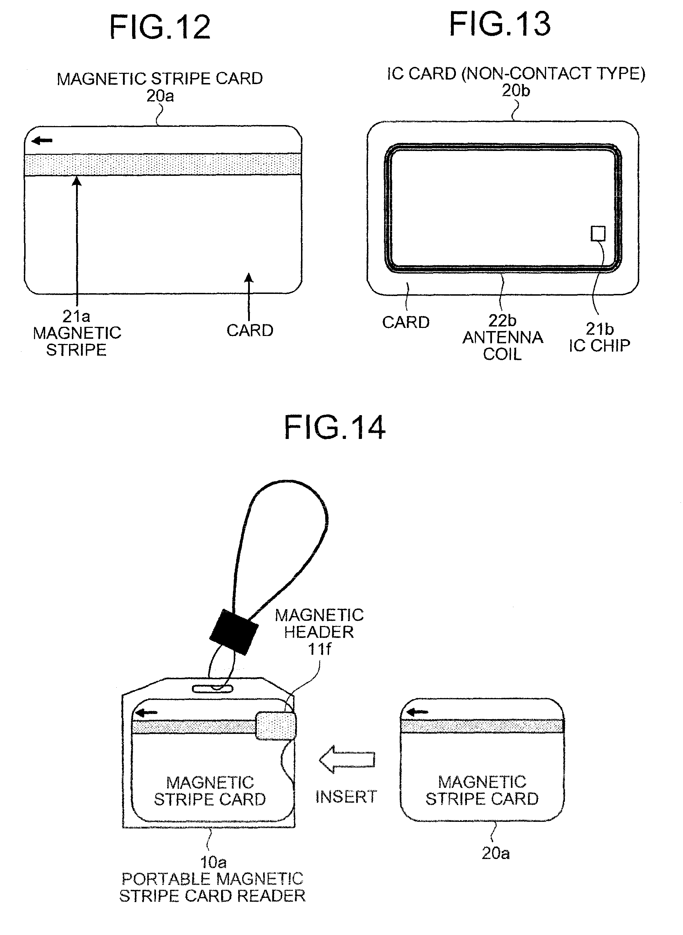

A magnetic stripe card 20a or a contactless IC card 20b can also be used instead of the contact-type IC card 20 that is used for identifying a location of a user. The magnetic stripe card 20a and the contactless IC card 20b are explained below in detail. As shown in Fig. 12, the magnetic stripe card 20a includes a magnetic strip 21a that stores data therein. As shown in Fig. 13, the contactless IC card 20b includes an IC chip 21b and an antenna coil 22b. The contactless IC card 20b sends or receives data through the antenna coil 22b.

The process of how a portable magnetic stripe card reader 10a reads data from the magnetic stripe card 20a is explained below. As shown in Fig. 14, the portable magnetic stripe card reader 10a includes a magnetic header 11f in the vicinity of an insertion slot where the magnetic stripe card 20a is inserted. The portable magnetic stripe card reader 10a reads the data stored in the magnetic strip 21a when the magnetic stripe card 20a is inserted and the magnetic strip 21a passes across the magnetic header 11f.

In the above embodiments, the portable IC card reader 10 relays the card ID when the IC card 20 is inserted and does not relay any data when the IC card 20 is not inserted. However, the portable IC card reader 10 can be configured to relay data even if the IC card 20 is not inserted. Alternatively, the portable IC card reader 10 may be configured to relays data related to the portable card reader itself along with the card ID.

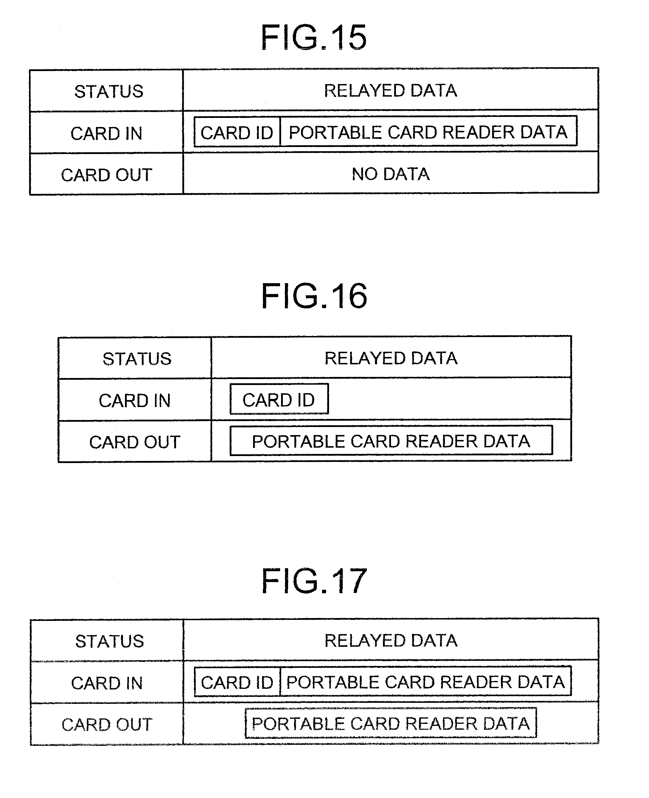

Specifically, as shown in Fig. 15, the portable 1C card reader 10 can be configured to relay the card ID and the portable card reader data when the card is inserted, and does not relay any data when no card is inserted. Alternatively, as shown in Fig. 16, the portable IC card reader 10 can be configured to relay the card ID when the card is inserted, and the portable card reader data when the card is not inserted. As still another alternative, as shown in Fig. 17, the portable IC card reader 10 can be configured to relay the card ID and the portable card reader data when the card is inserted, and only the portable card reader data when the card is not inserted.

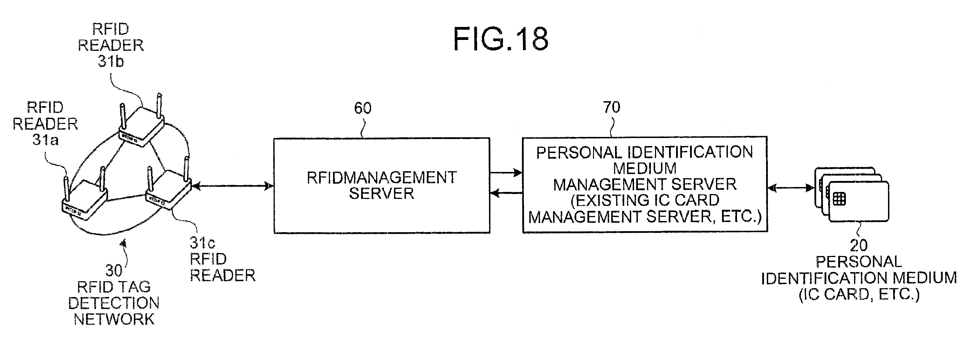

Although the single management server 40 includes the RFID managing unit 41 that identifies the location of the user and the personal identification managing unit 42 that manages the personal identification medium, two management servers can be provided separately for the two functions. Specifically, as shown in Fig. 18, an RFID management server 60 can be provided for identifying the location of the user, and a personal identification medium management server 70 can be separately provided for managing the personal identification medium.

In the above embodiments, the portable IC card reader 10 performs radio relay of the card ID with the IC card 20 inserted therein. However, the portable IC card reader 10 can be configured to perform radio relay of the card ID when the IC card 20 is inserted once and removed thereafter. In other words, the card ID is stored in the memory 11d, and the portable IC card reader 10 can read the card ID even after the IC card has been removed.

In the second embodiment, the management server 40 controls the entry access based on the user route. However, the management server 40 can be configured to control entry access based on a traveling period or a traveling distance. For example, the management server 40 can be configured to deny entry access from a user who takes a long time to achieve a specific spot.

The constituent elements of the device illustrated are merely conceptual and may not necessarily physically resemble the structures shown in the drawings. For instance, the device need not necessarily have the structure that is illustrated. The device as a whole or in parts can be broken down or integrated either functionally or physically in accordance with the load or how the device is to be used. For example, the IC reading unit 11a and the control unit 11b can be integrated. Further, the process functions performed by the device can be entirely or partially realized by a central processing unit (CPU) or a computer program executed by the CPU or by a hardware using wired logic.

According to an embodiment of the present invention, the location identification/management system can be built by using an existing personal identification medium and an existing management server, without distributing a new RFID tag or installing a new management server, thus cutting down the person-hours and reducing the risk of missed RFID tag issuing or missed entry of tag ID. Further, the location identification/management system does not need a new IC card, which improves user convenience and reduces the risk to be stolen or lost.

Moreover, if a moving object tries to enter a predetermined place via a suspicious route, the location identification/management system can deny an entry access of the moving object. This configuration makes it possible to enhance security.

Furthermore, the location identification/management system can identify, for example, only users who enter an important place. By limiting users to be identified the location identification/management system enables curling down in processing load.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A system that identifies and manages a location of a moving object based on a moving object identifier stored in a portable medium that is carried by the moving object, the system comprising:
a portable medium reader that is configured to be carried by the moving object, the portable medium reader including
a reading unit that reads the moving object identifier stored in the portable medium; and
a relaying unit that relays the moving object identifier;
a plurality of radio frequency identification (RFID) readers, each placed at a different location and assigned with a unique RFID-reader identifier, the RFID reader including
a first receiving unit that receives relayed moving object identifier; and
a notifying unit that transmits a notification containing the moving object identifier and the unique RFID-reader identifier assigned thereto;
a management server that includes
a second receiving unit that receives the notification; and
a identifying unit that identifies a location of the moving object from the moving object identifier and the unique RFID-reader identifier contained in the notification.

2. The system according to claim 1, wherein the relaying unit of the portable medium reader relays the moving object identifier a plurality of times at different timings.

3. The system according to claim 1 or 2, wherein the management server further includes an entry-access control unit that permits entry of the moving object into a predetermined place based on a route along which the moving object travels to the predetermined place, the route being a group of locations identified by the identifying unit.

4. The system according to claim 1 or 2, wherein the management server further includes an entry-access control unit that permits only a specific moving object to enter a predetermined place, and
when the entry-access control unit permits the specific moving object to enter the predetermined place, the identifying unit identifying a location of specific moving object after entering.

5. A portable medium reader that to be carried by a moving object, the portable medium reader comprising:
a reading unit that reads a moving object identifier from a portable medium; and
a relaying unit that relays the moving object identifier such that a radio frequency identification reader can receive relayed moving object identifier.

6. A method of managing a location of a moving object based on a moving object identifier stored in a portable medium that is carried by the moving object, the method comprising:
a first control that is performed by a portable medium reader including
reading the moving object identifier stored in the portable medium; and
relaying the moving object identifier;
a second control that is performed by a plurality of radio frequency identification (RFID) readers, each placed at a different location and assigned with a unique RFID-reader identifier, the second control including
receiving relayed moving object identifier; and
transmitting a notification containing the moving object identifier and the unique RFID-reader identifier assigned thereto; and
a third control that is performed by a management server including
receiving the notification; and
identifying a location of the moving object from the moving object identifier and the unique RFID-reader identifier contained in the notification.

7. The method according to claim 6, wherein the relaying includes relaying the moving object identifier a plurality of times at different timings.

8. The method according to claim 6 or 7, wherein the third control further includes permitting entry of the moving object into a predetermined place based on a route along which the moving object travels to the predetermined place, the route being a group of locations identified at the identifying.

9. The method according to claim 6 or 7, wherein the third control further includes permitting only a specific moving object to enter a predetermined place, and
when the specific moving object is permitted to enter the predetermined place, the identifying includes identifying a location of specific moving object after entering.
